(19) Europäisches Patentamt / European Patent Office / Office européen des brevets

(11) **EP 2 088 763 B1**

(12) **EUROPEAN PATENT SPECIFICATION**

(45) Date of publication and mention
of the grant of the patent:
**01.01.2014 Bulletin 2014/01**

(51) Int Cl.:
*H04N 3/14* (2006.01)     *H04N 5/335* (2011.01)

(21) Application number: **08162253.2**

(22) Date of filing: **12.08.2008**

(54) **Time delay integration in imaging devices**

Zeitverzögerungsintegration in Bildgebungsvorrichtungen

Intégration de temporisation dans des dispositifs d'imagerie

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **11.02.2008 GB 0802478**

(43) Date of publication of application:
**12.08.2009 Bulletin 2009/33**

(73) Proprietor: **Cmosis NV
2600 Antwerpen (Berchem) (BE)**

(72) Inventors:
• **Bogaerts, Jan
2860 Sint Katelijne Waver (BE)**
• **Meynants, Guy
2470 Retie (BE)**
• **Lepage, Gérald
1300 Wavre (BE)**

(74) Representative: **Bird, William Edward et al
Bird Goën & Co
Wetenschapspark Arenberg
Gaston Geenslaan 9
3001 Heverlee (BE)**

(56) References cited:
EP-A1- 0 575 220     US-A- 5 323 186
US-B1- 7 268 814

• LEPAGE G ET AL: "CMOS long linear array for space application", SENSORS, CAMERAS AND SYSTEMS FOR SCIENTIFIC/INDUSTRIAL APPLICATIONS VII. PROCEEDINGS OF SPIE-IS&T ELECTRONIC IMAGING, SPIE, US, vol. 6068, 1 January 2006 (2006-01-01), pages 606807-1, XP007912764,
• MORLEY M BLOUKE: "Imaging Detectors. Charge-coupled Devices and CMOS Active Pixel Sensors", OPTIC ENCYCLOPEDIA, WILEY-VCH, 1 January 2007 (2007-01-01), pages 815-875, XP007918019, DOI: DOI: 10.1002/9783527600441.OE27 [retrieved on 2007-09-15]

## Description

## FIELD OF THE INVENTION

This invention relates to semiconductor pixel arrays for use in image sensors and, in particular, image sensors which are suitable for Time Delay Integration (TDI) operation.

## BACKGROUND TO THE INVENTION

Solid-state detectors such as charge coupled devices (CCD) or CMOS Active Pixel Sensors are widely used in a variety of imaging applications. Typically, the sampling elements (pixels) are arranged in rows and columns to convert the electromagnetic radiation from a scene into charges that are converted into electrical signals. A linear array consists of only one row of pixels (one dimensional, 1D) while an area array consists of an array of pixels with multiple rows and columns (two dimensional, 2D).

A 2D array is typically used to image a two dimensional scene. This scene should in general be fixed during the period the pixels integrate (accumulate/collect) the photo-generated charges (integration period). If the scene is moving with respect to the detector and the corresponding movement during the integration period on the detector is considerable with respect to the pixel pitch, the resulting image will be blurred. In many imaging applications the image scene moves relative to the detector with a constant or predictable velocity. For example, a stationary camera placed above, or adjacent to, a conveyor belt can image the objects on the conveyor belt. This principle can be generally used in machine vision applications, as well as fax machines, document copiers and similar machines. Another well known application is pushbroom imaging from a satellite or aircraft where the camera images the ground scene. In such cases, a 1D array can be used to generate 2D images by repeatedly exposing and integrating on the single row of pixels while moving the detector in a direction orthogonal to the long dimension of the array. The direction of the motion is called 'along-track', while the direction orthogonal to this motion direction is called 'across-track'. One significant problem of the scanned reading mode is that - because of the relative motion - the exposure time for each image 'slice' is limited, restricting the image performance in terms of signal-to-noise ratio (SNR).

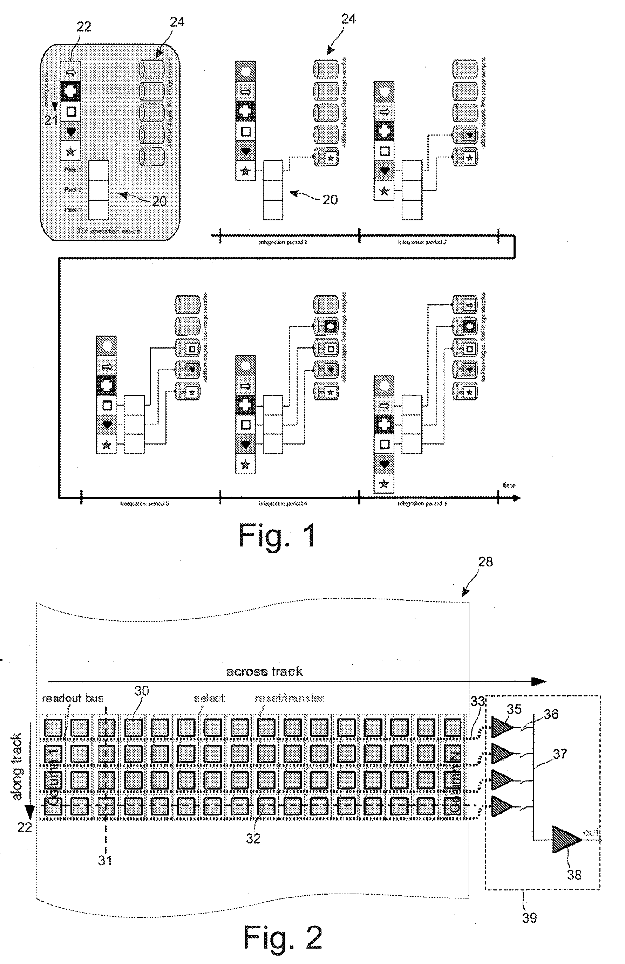

In line scan applications where the light level is low, or where the relative speed of the movement is large, Time Delay Integration (TDI) image sensors are useful. In a TDI sensor a 2D pixel array is used. The pixel signals delivered by the pixels of the same column (along-track direction) are in that case adequately delayed and added synchronously with the optical scanning. Thus, the light from a given point in the scene impinges successively on each pixel of the given corresponding column. As the light of the scene impinges on each row in succession, the signals from each of the rows are added to increase the final SNR. A simple example of the TDI principle is illustrated in Figure 1. A 1D image sensor comprising a column of pixels (Pixel 1, pixel 2, pixel 3) 20 is shown. A subject 22 is moved past the image sensor 20 in the direction 21. Five separate integration periods are shown. During the first integration period, the first element of subject 22 is detected by pixel 1 of the sensor 20 and stored in a first storage device of processing circuitry 24, which can be located on or off-chip. During the second integration period, the first element of subject 22 is detected by pixel 2 of the sensor 20 and is summed (integrated) with the previously stored copy of the same element in the first storage device of processing circuitry 24 (which now shows a count of "2"). In addition, the second element of subject 22 is detected by pixel 2 of the sensor 20 and is stored in a second storage device of processing circuitry 24. The process continues over subsequent integration periods, with each storage device in processing circuitry 24 accumulating multiple detected copies of the same elements of subject 22.

The TDI principle has typically been addressed with CCD sensors where the TDI functionality is more or less intrinsically available by shifting the charge packets along the CCD synchronously with the moving image. This addition process is in a CCD also nearly noise free. This is not so easily implemented in CMOS APS. However, there are compelling reasons to implement this functionality in CMOS because of the advantages of process accessibility, reduced cost, additional circuit functionality on-chip, simpler system design etc.

Attempts at performing TDI in non-CCD image sensors are described in US 6,906,749, EP 1 667 428 A2 and US 5,828,408. A CMOS TDI sensor implementation having active pixels with snapshot shutter capability has been described by Pain et al. ("CMOS Image Sensors Capable of Time-Delayed Integration," NASA Tech Brief Vol. 25, No. 4) and in US 7,268,814. The snapshot shutter capability means that all pixels start and stop their integration period simultaneously. As a ground pixel moves its focus from pixel to pixel along the column of the APS array, the signal from this ground pixel is multiply sampled, and each sample is integrated onto the storage capacitor on one integrator in the integrator array. Since the ground pixel moves from pixel to pixel in the imaging array, the TDI imager must continually keep track of which pixel's output is added to which integrator. After a given ground pixel has moved through all rows, the output of the corresponding integrator is sent to the ADC for digitization, and the integrator is reset so that it can begin the integration of the new ground pixel that moves into the field of view. Of course, all pixels in the column must be connected in turn to the appropriate integrators in the time it takes for a ground pixel to move from one imager pixel to the next. The signal is dumped in a snapshot mode that eliminates motion artefacts that would otherwise be caused by the fact that each imager pixel is addressed at a slightly different time. The drawback of implementing a snapshot shutter pixel is that it requires more circuitry in the pixel, thereby lowering the fill factor and or quantum efficiency. A snapshot shutter pixel requires an additional sample-and-hold stage in the pixel to memorise the pixel signal before being readout. Another possible drawback is that the stored signal is unintentionally still affected by light (parasitic light sensitivity, shutter efficiency). It is possible to avoid the need for a global shutter for the pixels of the array, which avoids the need to perform in-pixel sampling of the signal. In-pixel sampling of the signal requires sample-and-hold circuitry in the pixel, which reduces the fill factor and thus light sensitivity of the pixel. Also, the global shutter is typically not perfect, i.e. the sampled signal is still slightly light sensitive. This can introduce a further reduction of modulation transfer function (MTF), which is a measure of sharpness, and may result in a degradation of the SNR.

Lepage G. et al, "CMOS long linear array for space application", Sensors, Cameras and Systems for Scientific/Industrial Applications VII, Proceedings of SPIE-IS&T Electronic Imaging, Vol. 6068, 1 January 2006, pages 606807-1, XP007912764, describes a CMOS linear array which can operate in a TDI mode, optionally applying a rolling shutter mode.

The present invention seeks to provide an alternative imaging device suitable for performing Time Delay Integration (TDI).

## SUMMARY OF THE INVENTION

A first aspect of the present invention provides an imaging device according to claim 1.

The integration period start time of each column of the array can be offset from an integration period start time of any other column of the array, i.e. each column has a different integration period start time and a different integration period stop time from any other column of the array. One way of achieving this is to sequentially offset the integration period start times of columns from one another across the array. Alternatively, at least some of the columns of the array can have the same integration period start times. One way of achieving this is to provide a repeating pattern of integration period start times across the columns of the array.

In a simplest form, the imaging device has a set of readout buses, with one readout bus provided per row of pixels, and readout circuitry is arranged to use the set of readout buses to read from a single column of pixels during each reading operation.

In an advantageous embodiment of the invention, readout buses are provided in a layout which permits multiple columns of pixels to be read during each reading operation. One advantageous way of achieving this is to provide a set of readout buses, each readout bus connecting a group of pixels which are positioned diagonally across the array. Other advantageous arrangements for the layout of the readout buses are: each readout bus connects a plurality of pixels which are positioned non-orthogonally with respect to the first axis of a column; each column comprises a plurality of pixels in an ordered sequence in the direction of the first axis and a readout bus connects a group of pixels in different columns of the array, the pixels in the group having different positions in the respective sequences of the columns.

Advantageously a physical offset, in the direction of the first axis, is provided between pixels of at least one of the columns of the array with respect to pixels of other columns in the array. The physical offset can be used to fully, or partially, compensate for the difference in integration period start times of the columns. In a preferred embodiment, the physical offset is based on the difference in integration period start times and speed of the relative movement.

Advantageously, a sample and hold circuit is connected to an output of each readout bus.

Advantageously, outputs of the readout buses are connected to integration circuitry which is arranged to integrate outputs of pixels which are exposed to a common element of the subject.

Advantageously, the two-dimensional array of pixels has a greater number of pixels in a direction across the array than it has in a column of the array.

The imaging device is suitable for manufacture using a CMOS manufacturing process.

The imaging device can be used in variety of applications. A non-limiting set of examples are: machine vision, analysis of items on a conveyor belt, product inspection, document processing (e.g. scanners), aerial imaging.

Throughout this specification, the term "column" has been used as a shorthand way of referring to a line of elements of the array which are aligned with the direction of relative movement. The terms "row" and "column" can be used interchangeably. The terms "row" and "column" do not imply any particular physical orientation of the array.

## BRIEF DESCRIPTION OF THE DRAWINGS

Embodiments of the invention will be described, by way of example only, with reference to the accompanying drawings in which:

Figure 1 shows a Time Delay Integration (TDI) process;
Figure 2 shows an embodiment of an image sensor for TDI operation according to the present invention;
Figures 3 and 4 show pixels for use in the pixel array of the image sensor of Figure 2;
Figure 5 shows control of the array of Figure 2;
Figure 6 shows exposure times for columns of the array of Figure 2;
Figure 7 shows an image resulting from the array of Figure 2;
Figure 8 shows read out from the array of Figure 2;
Figure 9 shows another embodiment of an image sensor for TDI operation according to the present invention with diagonal read out buses;
Figure 10 shows read out from the array of Figure 9;
Figure 11 shows an image resulting from the array of Figure 9;
Figure 12 shows an alternative physical configuration of the array of Figure 2 to compensate for the effect shown in Figure 7;
Figure 13 shows an alternative physical configuration of the array of Figure 9 to compensate for the effect shown in Figure 11;
Figure 14 shows a corrected image.

**DESCRIPTION OF PREFERRED EMBODIMENTS**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

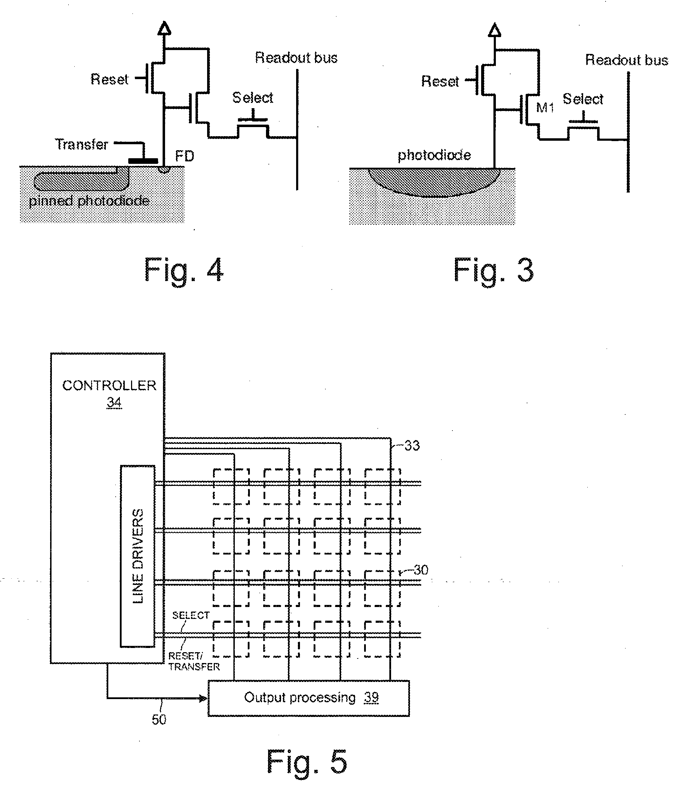

Figure 2 shows a first embodiment of an image sensor according to the present invention. The image sensor comprises a two-dimensional array of pixels 30. The pixels 30 of the array 30 are arranged in columns (column 1...column N). The array is intended to image a subject 28. There is relative movement between the subject 28 and the array in a direction 22. The relative movement can result from: a movable subject (e.g. conveyor belt, document) drawn past a fixed array; a mobile array moved across a static subject; or a mobile array moved across a movable subject. Each column has a longitudinal axis 31 which is aligned with the direction 22 of relative movement (called the "along track" direction). In this embodiment, pixels of the array are arranged in rows, each with a longitudinal axis 32 which is orthogonal to the longitudinal axis 31 of the columns of pixels. The longitudinal axis 32 of the rows are also parallel to the "across track" direction of the subject 28. Each row of pixels in the array has a dedicated readout bus 33. In Figure 2, there are four rows of pixels and four readout buses. Control lines (marked "select" in Figure 2) selectively activate a column of pixels and cause pixels in that column to be connected to the readout bus. Each readout bus 33 is connected to an amplifier 35 and the output of the amplifier is selectively connectable by a switch 36 to an output bus 37. A further output amplifier 38 is also shown. Figures 3 and 4 show examples of pixels 30 that can be used in the array. Figure 3 shows a conventional three transistor (3T) Active Pixel Sensor (APS) and Figure 4 shows a four transistor (4T) floating diffusion or pinned diode pixel in which charge is selectively transferred to a floating diffusion node of the pixel. The operation of both of these types of pixel is well known. Each pixel connects to the "select", "reset", "transfer" and readout buses 33 shown in Figure 2. The invention is not limited to these types of pixel. Indeed, the invention is also applicable to passive pixels which do not include a buffer amplifier within each pixel.

The photodiode, or pinned photodiode, in each pixel of the array is exposed to radiation for an integration period, during which charge is generated and is integrated in the pixel. The precise operation differs for each type of pixel. For a 3T APS, generated charge accumulates on the gate of the source-follower/buffer amplifier M1. For a 4T pixel, generated charge accumulates on the source of the transfer transistor and is transferred to the gate of the source-follower after integration. The integration period is controlled by the RESET and TRANSFER control signals, in a known way. A rolling shutter is provided across the array, i.e. in the "across track" direction, of Figure 2.

Figure 5 shows control circuitry for the array of pixels 30. A controller 34 comprises line drivers for outputting signals "SELECT", "RESET" and (in the case of a 4T or similar pixel) "TRANSFER". Controller 34 controls the times at which the "RESET" and "TRANSFER" signals are generated which, in turn, controls the integration period and integration period start and stop times. Controller 34 controls the times at which the "SELECT" signals are generated to read the sample values of each pixel. Output processing circuitry 39 includes the functions previously described in Figure 2. Controller 34 controls operation of output processing circuitry 39 via signal 50. This control includes operation of switches 36, 136 to transfer sample values held in sample-and-hold circuits 35, 135 to output bus 37, 137 in a time-multiplexed manner.

The controller 34 implements a "rolling shutter" which will now be described. Each column of pixels is integrated synchronously. Each column of pixels simultaneously experiences the same integration period (also known as an "exposure period"), with the start time and the end time of the integration period being the same for each pixel in the column of pixels. The duration of the integration period of each column is equal, but the start of the integration periods of different columns are offset from one another.

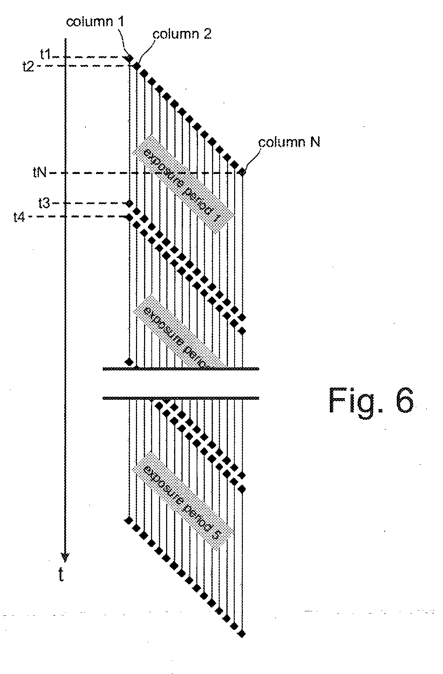

Figure 6 shows the integration periods for the array of Figure 2. Firstly, the integration (exposure) period of column 1 begins at time t1. After a short delay, the integration period of column 2 begins at time t2. This continues for each of the N columns. The integration period of column 1 ends at time t3. After a short delay to read and reset the pixels of that column, a new integration period for column 1 begins at time t4. Figure 6 clearly shows that the length of the integration period is equal for each column of the array. Figure 6 also shows that the integration period for column N begins before the integration period for column 1 has ended (assuming that integration happens with almost 100% duty cycle). All columns are read out in a period smaller than, or equal to, the time the scene has moved over a distance according to the reference TDI sampling distance in the "along track" direction 21 (ground sampling distance (GSD)). In general, it is typically required to synchronise the integration periods with the relative movement so that pixels in the "along track" direction sequentially sample the same scene information, although this is not essential.

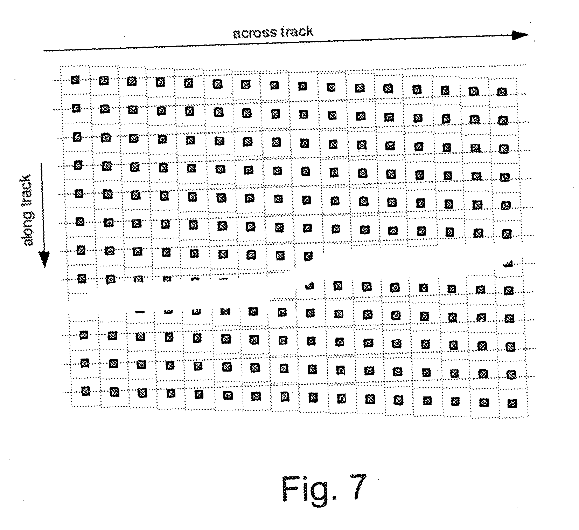

The process described here will result in an image with a non-orthogonal coordinate system and the image has thus the form of a parallelogram, as shown in Figure 7. This is not an issue in many applications.

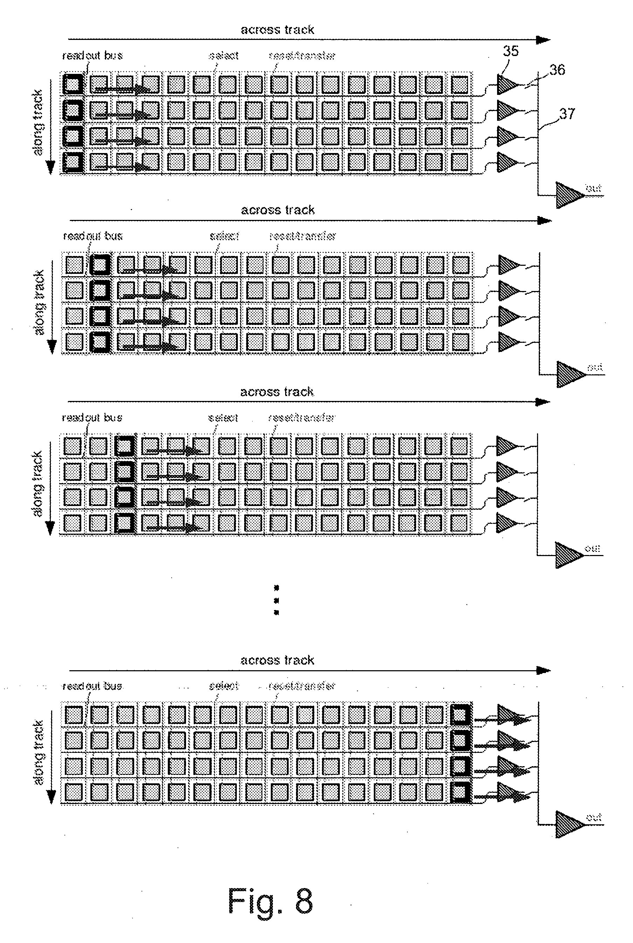

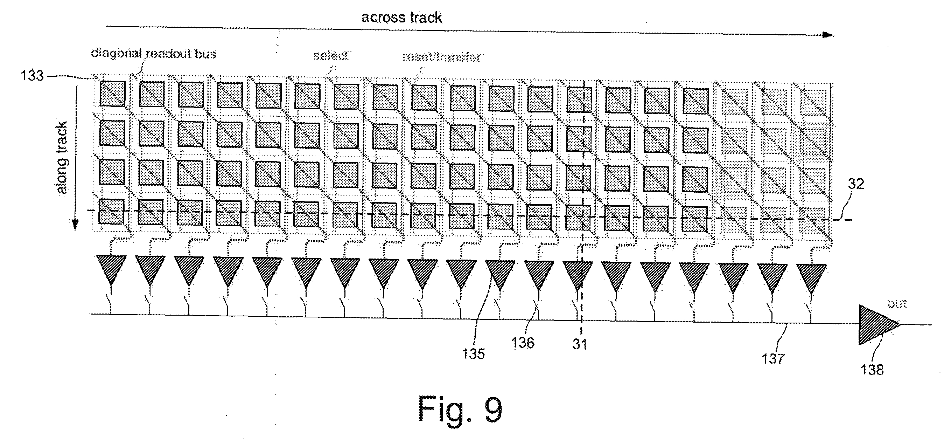

The process of reading the array of Figure 2 is shown in Figure 8. At the end of an integration period for a column of pixels (e.g. at time t3 for column 1 in Figure 6) the column of pixels are read. This process is shown in Figure 8. The column of pixels is selected, by raising the "select" control signal to those pixels, and the value of each pixel is applied to the respective readout bus. The column of pixels are read in parallel. Amplifier 35 at the end of each readout bus 33 performs a sample-and-hold operation on the signal on the read-out bus 33. The set of signals held by amplifiers 35 are read in a time-multiplexed manner on to output bus 37. After each integration period, a similar operation is performed for a column of pixels. Figure 8 shows the process repeated for columns 2, 3 and column N. Figure 8 does not show the subsequent processing of data output from the pixel array, as this is conventional in operation. The process has already been described in outline in Figure 1. Similar elements of a subject are accumulated in storage devices, such as integrators or registers of a processor. At the end of the TDI process, which will be after four integration periods using the four line arrays of Figures 2 and 9, an element of the final image is output. The subsequent processing can be performed on the same chip as the pixel array, or by an off-chip processor. An example of the required processing is described in US 7,268,814, which describes the use of a bank of integrators.

One potential disadvantage of the rolling shutter readout as in Figure 8 is that the number of pixels in the "across track" direction is usually significantly larger than in the along track direction (TDI level). As a result, the multiplexing readout buses 33 in the pixel array are longer and more heavily loaded, which can lead to lower multiplexing speed and increased power consumption. Typically, each readout bus also requires a line overhead time to sample the multiplexed signals into the readout circuits. Since the number of lines to be read out is larger, the frame rate is also reduced.

Figure 9 shows a second embodiment of the invention which can overcome some of the disadvantages of the first embodiment. Corresponding features of the array are the same as previously described and do not need to be described again. A set of readout buses 133 are provided which allow multiple columns to be simultaneously read. In Figure 9, this advantage is achieved by providing a set of readout buses 133 which follow a diagonal path across the array and connect a diagonally positioned group of pixels. The set of readout buses 133 are arranged parallel to each other. Figure 9 shows one possible layout for a set of readout buses 133. A first readout bus 133 connects the top pixel of column 1, the second pixel of column 2, the third pixel of column 3 and the fourth pixel of column 4. An output amplifier 135, with a sample-and-hold function, is connected to the output of the readout bus 133. The amplifiers 135 are selectively connectable, via switches 136, to an output bus 137 and an output amplifier 138.

An advantage of having the diagonally arranged multiplexing buses 133 is that they are quite short, and connect to fewer pixels. This means that they have a lower capacitance and therefore can be operated at a faster speed than the arrangement of Figure 2. This configuration also allows multiple columns to be read out in parallel. This can be achieved by using multiple pointers for selection. The rolling shutter operation for reset (and transfer in case of 4T) and select lines is still very similar but multiple pointers are active in the pixel array.

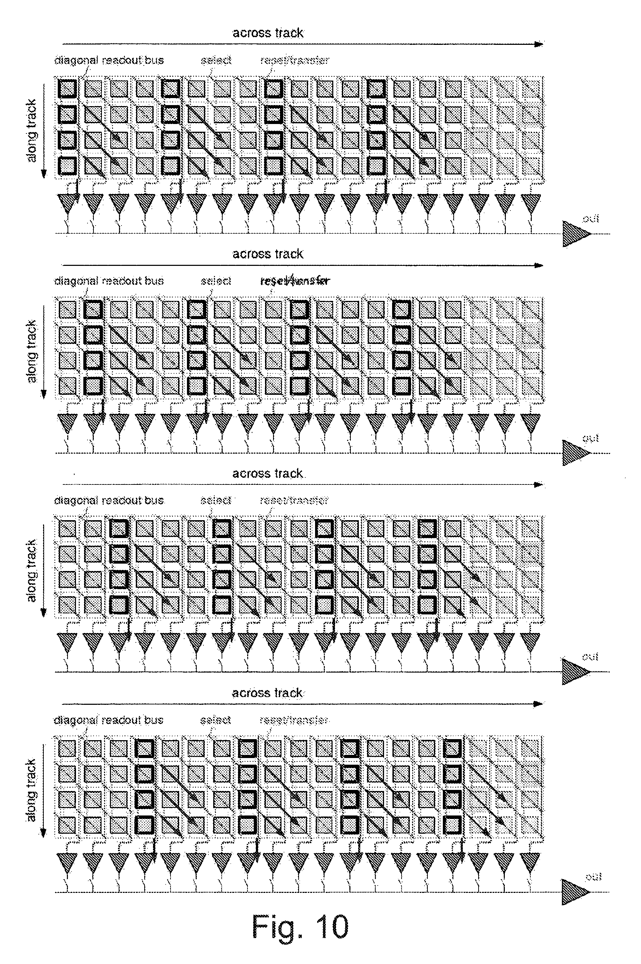

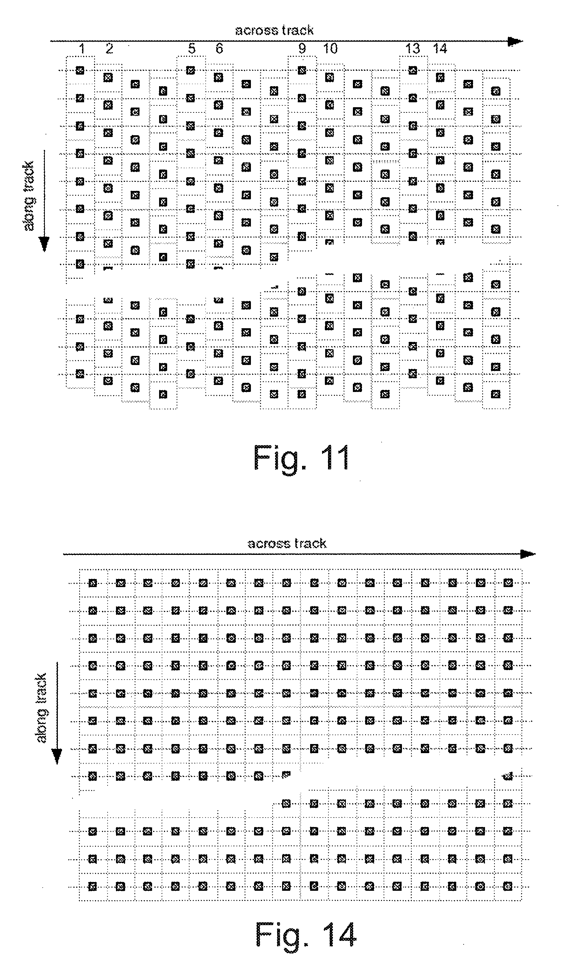

The process of reading the array of Figure 9 is shown in Figure 10. At the end of the integration period for column 1 of the array, that column of pixels are read. The column of pixels is selected, by raising the "select" control signal to those pixels, and the value of each pixel is applied to the respective readout bus 133. The column of pixels are read in parallel. Amplifier 135 at the end of each readout bus 133 performs a sample-and-hold operation on the signal on the read-out bus 133. The set of signals held by amplifiers 135 are read in a time-multiplexed manner on to output bus 137. Column 5, Column 9, Column 13 (and any other columns offset by 4 columns) can also be read at the same time. This is because the paths of the readout buses serving columns 1, 5, 9 and 13 do not have any pixels in common. Looking at the readout buses for column 1, it can be seen that they are only connected to pixels in columns 2, 3 and 4. Therefore, the readout buses connected to the pixels of column 5 can be operated independently. It will be appreciated that this embodiment requires time-multiplexed switches 136 to read a larger number of signals onto bus 137 during each read operation (in this example, four times as many), but this is easily accommodated. At the end of the integration period for columns 2, 6, 10, 14 a similar operation is performed for these columns of pixels. Figure 11 shows an image resulting from the array of Figures 9 and 10. The image has a sawtooth-like profile. It can be seen that the pixels of columns that have been integrated, and read, at the same time are aligned with other. So, the pixels of columns 1, 5, 9 and 13 are all aligned with each other. Pixels of other groups of columns that were integrated at the same time as one another (e.g. columns 2, 6, 10, 14) are similarly aligned with each other, but offset (in the along track direction) with respect to the pixels of other groups of columns. It should be understood that the layout of readout buses 133 shown in Figure 9 is only one example of a range of possible layouts. In another example layout, a readout bus 133 extends diagonally across the pixel array from the bottom left-hand pixel 30 of the array (as viewed in Figure 9), connecting that pixel with the second pixel (viewed in an upward direction) in column 2, the third pixel of column 3 and the fourth pixel of column 4. Other readout buses lie parallel to that readout bus, and the pattern is repeated across the array.

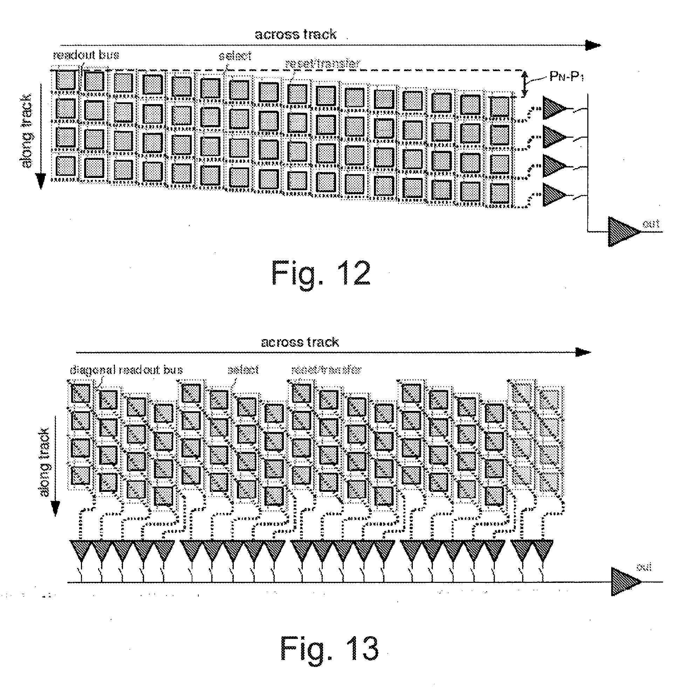

The process of sampling the scene synchronously in the along track direction and using a rolling shutter in the across track direction has the effects shown in Figure 7 or Figure 11. While these effects can be tolerated in some applications, it is possible to compensate for these effects by configuring the pixels of the array in a particular physical layout on the semiconductor chip. Figure 12 shows a physical layout of pixels which can be used in place of that shown in Figure 2. The columns of pixels of the array are offset with respect to each other in the along track direction. The offset between each pair of columns is constant. Each row of pixels now has an axis which is non-orthogonal with respect to the axis 31 of a column of pixels. The longitudinal axis of the entire array is also non-orthogonal with respect to the axis 31 of a column of pixels. The total accumulated shift of the columns over the complete detector (part readout by single readout pointer) should correspond to the shift in integration time between first and last column and the relative velocity of the scene:

$$P_N - P_1 = v \cdot (t_N - t_1)$$

where $P_N - P_1$ is the distance between the positions on the detector (in the direction of the first axis/direction of relative movement), v the relative velocity of the scene and $t_N - t_1$ is the difference in start times of the integration periods of the last column (column N) and first column (column 1). Figure 6 shows the start times t1, $t_N$ and Figure 12 shows the difference in positions $P_N - P_1$ between first and last columns of the detector.

Figure 13 shows a physical layout of pixels which can be used in place of that shown in Figure 9. Columns of pixels of the array are offset with respect to each other in the along track direction. Columns of pixels which are integrated at the same time are aligned with one another. Columns of pixels which are integrated at a later time are offset in the along track direction. The physical configuration of the array is directly related to the configuration of the final image shown in Figure 11.

Using an array as shown in Figure 12 or 13 provides a final image for which the shift in integration times between the columns is compensated by the shift in layout of the columns. Therefore, the resulting image will have an orthogonal coordinate system as shown in Figure 14.

Another way of modifying the resulting images shown in Figures 7 and 11 is to crop the sides of the parallelogram or sawtooth image to produce a rectangular image. This will only have the effect of curing the irregular shape of the final image. Postprocessing can be applied to compensate for the non-orthogonal shape, e.g. Fourier transform/inverse transform, although this is likely to result in some degradation of the SNR.

In the examples described above, a single readout bus 33, 133 connects to each pixel. It is also possible to connect each pixel to multiple (at least two) readout buses. In each of the embodiments, this will allow an increased number of columns of pixels to be read at any time. Looking again at Figure 2, consider that each row of pixels now has two readout buses 33. Consider the first two columns of the array - column 1, column 2. Both columns can now be read simultaneously. Pixels in column 1 connect to the first readout bus and pixels in column 2 connect to the second readout bus. Multiple readout buses per pixel are practical with pixels having a large area, as the fill factor penalty for routing an additional bus through the pixel is reduced. IN the example shown in Figure 9, an additional one or more diagonal readout buses can be provided, in parallel with the existing readout bus. Alternatively, the additional readout buses can have a different layout compared to the first set of readout buses.

Although the above examples have referred to "pixels", it will be understood that the array can be used for monochrome or colour imaging.

The invention is not limited to the embodiments described herein, which may be modified or varied without departing from the scope of the invention.

**Claims**

1. A CMOS imaging device for time delay integration (TDI) imaging of a subject, where there is relative movement between the imaging device and the subject in a first direction (22), the imaging device comprising:

a two-dimensional array of pixels (30), the array having a plurality of columns of pixels with each column being aligned with the first direction (22), each pixel (30) comprising a photo-sensitive element which is responsive to radiation during an integration period; **characterized in that**:

control circuitry (34) is arranged to control the pixels (30) in the array such that the pixels in a column of the array are simultaneously exposed to radiation over a common integration period for the column of pixels, with a start time of an integration period of the column of the array being offset from a start time of an integration period of at least one other column of the array, and that each column of pixels of the array is read at the end of the integration period for the respective column of pixels.

2. An imaging device according to claim 1 wherein the control circuitry (34) is arranged to control the pixels (30) in the array such that an integration period start time of each column of the array is offset from an integration period start time of any other column of the array.

3. An imaging device according to claim 2 wherein the integration period start times of columns are sequentially offset from one another across the array.

4. An imaging device according to claim 1 wherein a first group of columns of the array have a respective first set of integration period start times which are offset from one another and the first set of integration period start times is repeated for another group of columns of the array.

5. An imaging device according to claim 4 wherein the integration period start times of the first group of columns are sequentially offset from one another across the first group of columns.

6. An imaging device according to any one of the preceding claims wherein a physical offset, in the first direction (22), is provided between pixels of at least one of the columns of the array with respect to pixels of other columns in the array.

7. An imaging device according to claim 6 wherein the columns of the array are physically offset with respect to each other, in the first direction (22), with the offset being based on the difference between the start times of the integration periods of the columns.

8. An imaging device according to claim 6 or 7 wherein:

   a first set of columns of the array share a first integration period start time and are aligned with one another in the first direction (22); and a second set of columns of the array share a second integration period start time and are aligned with one another in the first direction (22), and wherein the second set of columns are physically offset, in the first direction (22), from the first set of columns.

9. An imaging device according to any one of the preceding claims further comprising:

   a set of readout buses (33), each readout bus (33) connecting a row of pixels (30) across the array; readout circuitry for reading signals from the pixels, the readout circuitry being arranged to use the set of readout buses (33) to read from a column of pixels during a reading operation.

10. An imaging device according to claim 9 wherein each row of pixels (30) has a longitudinal axis (32), and the longitudinal axis (32) is not orthogonal to the first direction (22).

11. An imaging device according to any one of claims 1 to 8 further comprising:

    a set of readout buses (33; 133), each readout bus (33; 133) connecting a plurality of pixels (30) which are positioned non-orthogonally with respect to the first direction (22).

12. An imaging device according to any one of claims 1 to 8 wherein each column comprises a plurality of pixels (30) in an ordered sequence in the first direction (22), the device further comprising:

    a set of readout buses (133), with a readout bus (133) connecting a group of pixels (30) in different columns of the array, the pixels in the group having different positions in the respective sequences of the columns.

13. An imaging device according to claim 12 wherein the pixels in the group having sequential positions in the respective sequences of the columns.

14. An imaging device according to any one of claims 1 to 8, further comprising:

    a set of readout buses (133), each readout bus connecting a group of pixels which are positioned diagonally across the array.

15. An imaging device according to any one of claims 11 to 14 wherein the set of readout buses (133) are parallel to one another.

16. An imaging device according to any one of claims 11 to 15 further comprising:

    readout circuitry for reading signals from the pixels (30), the readout circuitry being arranged to use the readout buses (133) to read from a first column of pixels and, during the same reading operation, to read at least one further column of pixels, wherein the readout buses (133) connected to the first column of pixels and the read-out buses (133) connected to the at least one further column of pixels do not have any pixels in common.

17. A method of imaging a subject, where there is relative movement between a CMOS imaging device and the subject in a first direction (22), the imaging device comprising a two-dimensional array of pixels (30), the array having a plurality of columns of pixels with each column being aligned with the first direction (22), each pixel comprising a photo-sensitive element which is responsive to radiation during an integration period, the method **characterized in** controlling the pixels in the array such that the pixels in a column of the array are simultaneously exposed to radiation over a common integration period for the column of pixels, with a start time of an integration period of the column of the array being offset from a start time of an integration period of at least one other column of the array, and **in that** each column of pixels of the array is read at the end of the integration period for the respective column of pixels.

**Patentansprüche**

1. CMOS-Bildgebungsvorrichtung für eine Time Delay Integration (TDI, Integration mit Zeitverzögerung) Bildgebung eines Subjekts, wobei eine relative Bewegung zwischen der Bildgebungsvorrichtung und dem Subjekt in einer ersten Richtung (22) vorhanden ist, wobei die Bildgebungsvorrichtung umfasst:

   eine zweidimensionale Anordnung von Pixeln (30), wobei die Anordnung mehrere Spalten von Pixeln aufweist, wobei jede Spalte mit der ersten Richtung (22) ausgerichtet ist, wobei jedes Pixel (30) ein lichtempfindliches Element umfasst, das auf Strahlung während einer Integrationsperiode anspricht;
   **dadurch gekennzeichnet, dass**:

   ein Steuerschaltkreis (34) zur derartigen Steuerung der Pixel (30) in der Anordnung angeordnet ist, dass die Pixel in einer Spalte der Anordnung gleichzeitig Strahlung über eine gemeinsame Integrationsperiode für die Spalte von Pixeln ausgesetzt sind, wobei eine Startzeit einer Integrationsperiode der Spalte der Anordnung zu einer Startzeit der Integrationsperiode mindestens einer anderen Spalte der Anordnung versetzt ist, und dass jede Spalte von Pixeln der Anordnung am Ende der Integrationsperiode für die jeweilige Spalte von Pixeln ausgelesen wird.

2. Bildgebungsvorrichtung nach Anspruch 1, wobei der Steuerschaltkreis (34) zum derartigen Steuern der Pixel (30) in der Anordnung angeordnet ist, dass eine Integrationsperioden-Startzeit der Spalte jeder Anordnung zu einer Integrationsperioden-Startzeit jeder anderen Spalte der Anordnung versetzt ist.

3. Bildgebungsvorrichtung nach Anspruch 2, wobei die Integrationsperioden-Startzeiten der Reihe nach über die Anordnung zueinander versetzt sind.

4. Bildgebungsvorrichtung nach Anspruch 1, wobei eine erste Gruppe von Spalten der Anordnung einen entsprechenden ersten Satz von Integrationsperioden-Startzeiten hat, die zueinander versetzt sind, und der erste Satz von Integrationsperioden-Startzeiten für eine andere Gruppe von Spalten der Anordnung wiederholt wird.

5. Bildgebungsvorrichtung nach Anspruch 4, wobei die Integrationsperioden-Startzeiten der ersten Gruppe von Spalten der Reihe nach zueinander über die erste Gruppe von Spalten versetzt sind.

6. Bildgebungsvorrichtung nach einem der vorangehenden Ansprüche, wobei ein physischer Versatz in die erste Richtung (22) zwischen Pixeln von mindestens einer der Spalten der Anordnung in Bezug auf Pixel von anderen Spalten in der Anordnung vorgesehen ist.

7. Bildgebungsvorrichtung nach Anspruch 6, wobei die Spalten der Anordnung in Bezug zueinander in die erste Richtung (22) physisch versetzt sind, wobei der Versatz auf der Differenz zwischen den Startzeiten der Integrationsperioden der Spalten beruht.

8. Bildgebungsvorrichtung nach Anspruch 6 oder 7, wobei:

   Spalten in einem ersten Satz der Anordnung eine erste gemeinsame Integrationsperioden-Startzeit haben und in der ersten Richtung (22) miteinander ausgerichtet sind; und
   Spalten in einem zweiten Satz der Anordnung eine zweite gemeinsame Integrationsperioden-Startzeit haben und in der ersten Richtung (22) miteinander ausgerichtet sind, und wobei der zweite Satz von Spalten physisch in der ersten Richtung (22) zu dem ersten Satz von Spalten versetzt ist.

9. Bildgebungsvorrichtung nach einem der vorangehenden Ansprüche, des Weiteren umfassend:

   einen Satz von Lesebussen (33), wobei jeder Lesebus (33) eine Reihe von Pixeln (30) über die Anordnung verbindet;

einen Leseschaltkreis zum Lesen von Signalen aus den Pixeln, wobei der Leseschaltkreis zur Verwendung des Satzes von Lesebussen (33) angeordnet ist, um aus einer Spalte von Pixeln während einer Leseoperation zu lesen.

10. Bildgebungsvorrichtung nach Anspruch 9, wobei jede Reihe von Pixeln (30) eine Längsachse (32) hat und die Längsachse (32) nicht orthogonal zur ersten Richtung (22) verläuft.

11. Bildgebungsvorrichtung nach einem der Ansprüche 1 bis 8, des Weiteren umfassend:

einen Satz von Lesebussen (33; 133), wobei jeder Lesebus (33; 133) mehrere Pixel (30) verbindet, die nicht orthogonal in Bezug auf die erste Richtung (22) angeordnet sind.

12. Bildgebungsvorrichtung nach einem der Ansprüche 1 bis 8, wobei jede Spalte mehrere Pixel (30) in einer geordneten Abfolge in der ersten Richtung (22) umfasst, wobei die Vorrichtung des Weiteren umfasst:

einen Satz von Lesebussen (133), wobei ein Lesebus (133) eine Gruppe von Pixeln (30) in verschiedenen Spalten der Anordnung verbindet, wobei die Pixel in der Gruppe verschiedene Positionen in den jeweiligen Abfolgen der Spalten haben.

13. Bildgebungsvorrichtung nach Anspruch 12, wobei die Pixel in der Gruppe aufeinanderfolgende Positionen in den jeweiligen Abfolgen der Spalten haben.

14. Bildgebungsvorrichtung nach einem der Ansprüche 1 bis 8, des Weiteren umfassend:

einen Satz von Lesebussen (133), wobei jeder Lesebus eine Gruppe von Pixeln verbindet, die diagonal über die Anordnung positioniert sind.

15. Bildgebungsvorrichtung nach einem der Ansprüche 11 bis 14, wobei der die Lesebusse (133) in dem Satz parallel zueinander liegen.

16. Bildgebungsvorrichtung nach einem der Ansprüche 11 bis 15, des Weiteren umfassend:

einen Leseschaltkreis zum Lesen von Signalen aus den Pixeln (30), wobei der Leseschaltkreis zum Verwenden der Lesebusse (133) angeordnet ist, um aus einer ersten Spalte von Pixeln zu lesen und während derselben Leseoperation mindestens eine weitere Spalte von Pixeln zu lesen, wobei die Lesebusse (133) an die erste Spalte von Pixeln angeschlossen sind und die Lesebusse (133), die an die mindestens eine weitere Spalte angeschlossen sind, keine gemeinsamen Pixel haben.

17. Verfahren zum Abbilden eines Subjekts, wobei eine relative Bewegung zwischen einer CMOS-Bildgebungsvorrichtung und dem Subjekt in einer ersten Richtung (22) vorhanden ist, wobei die Bildgebungsvorrichtung eine zweidimensionale Anordnung von Pixeln (30) umfasst, wobei die Anordnung mehrere Spalten von Pixeln aufweist, wobei jede Spalte mit der ersten Richtung (22) ausgerichtet ist, wobei jedes Pixel (30) ein lichtempfindliches Element umfasst, das auf Strahlung während einer Integrationsperiode anspricht, wobei das Verfahren **gekennzeichnet ist durch**
Steuern der Pixel in der Anordnung derart, dass die Pixel in einer Spalte der Anordnung gleichzeitig Strahlung über eine gemeinsame Integrationsperiode für die Spalte von Pixeln ausgesetzt sind, wobei eine Startzeit einer Integrationsperiode der Spalte der Anordnung zu einer Startzeit der Integrationsperiode mindestens einer anderen Spalte der Anordnung versetzt ist, und **dadurch**, dass jede Spalte von Pixeln der Anordnung am Ende der Integrationsperiode für die jeweilige Spalte von Pixeln ausgelesen wird.

## Revendications

1. Dispositif d'imagerie CMOS pour l'imagerie par report et intégration (TDI) d'un sujet, où il y a un mouvement relatif entre le dispositif d'imagerie et le sujet dans une première direction (22), le dispositif d'imagerie comprenant :

une matrice bidimensionnelle de pixels (30), la matrice ayant une pluralité de colonnes de pixels, chaque colonne étant alignée sur la première direction (22), chaque pixel (30) comprenant un élément photosensible qui est sensible au rayonnement pendant une période d'intégration ; **caractérisé en ce que** :

des circuits de commande (34) sont agencés pour commander les pixels (30) dans la matrice de sorte que les pixels dans une colonne de la matrice sont simultanément exposés au rayonnement sur une période d'intégration commune pour la colonne de pixels, un instant de début d'une période d'intégration de la colonne de la matrice étant décalé par rapport à un instant de début d'une période d'intégration d'au moins une autre colonne de la matrice, et **en ce que** chaque colonne de pixels de la matrice est lue à la fin de la période d'intégration pour la colonne respective de pixels.

**2.** Dispositif d'imagerie selon la revendication 1, dans lequel les circuits de commande (34) sont agencés pour commander les pixels (30) dans la matrice de sorte qu'un instant de début de période d'intégration de chaque colonne de la matrice est décalé par rapport à un instant de début de période d'intégration d'une autre colonne de la matrice.

**3.** Dispositif d'imagerie selon la revendication 2, dans lequel les instants de début de période d'intégration de colonnes sont décalés de manière séquentielle les uns par rapport aux autres d'un bout à l'autre de la matrice.

**4.** Dispositif d'imagerie selon la revendication 1, dans lequel un premier groupe de colonnes de la matrice a un premier ensemble respectif d'instants de début de période d'intégration qui sont décalés les uns par rapport aux autres et le premier ensemble d'instants de début de période d'intégration est répété pour un autre groupe de colonnes de la matrice.

**5.** Dispositif d'imagerie selon la revendication 4, dans lequel les instants de début de période d'intégration du premier groupe de colonnes sont décalés de manière séquentielle les uns par rapport aux autres d'un bout à l'autre du premier groupe de colonnes.

**6.** Dispositif d'imagerie selon l'une quelconque des revendications précédentes, dans lequel un décalage physique, dans la première direction (22), est prévu entre des pixels d'au moins une des colonnes de la matrice par rapport à des pixels d'autres colonnes dans la matrice.

**7.** Dispositif d'imagerie selon la revendication 6, dans lequel les colonnes de la matrice sont physiquement décalées les unes par rapport aux autres, dans la première direction (22), le décalage étant basé sur la différence entre les instants de début des périodes d'intégration des colonnes.

**8.** Dispositif d'imagerie selon la revendication 6 ou 7, dans lequel :

les colonnes d'un premier ensemble de colonnes de la matrice partagent un premier instant de début de période d'intégration et sont alignées entre elles dans la première direction (22) ; et
les colonnes d'un second ensemble de colonnes de la matrice partagent un second instant de début de période d'intégration et sont alignées entre elles dans la première direction (22), et dans lequel les colonnes du second ensemble de colonnes sont physiquement décalées, dans la première direction (22), par rapport aux colonnes du premier ensemble de colonnes.

**9.** Dispositif d'imagerie selon l'une quelconque des revendications précédentes, comprenant en outre :

un ensemble de bus de lecture (33), chaque bus de lecture (33) reliant une rangée de pixels (30) d'un bout à l'autre de la matrice ;
des circuits de lecture pour lire des signaux à partir des pixels, les circuits de lecture étant agencés pour utiliser l'ensemble de bus de lecture (33) pour lire à partir d'une colonne de pixels pendant une opération de lecture.

**10.** Dispositif d'imagerie selon la revendication 9, dans lequel chaque rangée de pixels (30) a un axe longitudinal (32), et l'axe longitudinal (32) n'est pas orthogonal à la première direction (22).

**11.** Dispositif d'imagerie selon l'une quelconque des revendications 1 à 8 comprenant en outre :

un ensemble de bus de lecture (33 ; 133), chaque bus de lecture (33 ; 133) reliant une pluralité de pixels (30) qui sont positionnés de façon non orthogonale par rapport à la première direction (22).

**12.** Dispositif d'imagerie selon l'une quelconque des revendications 1 à 8, dans lequel chaque colonne comprend une pluralité de pixels (30) dans une séquence ordonnée dans la première direction (22), le dispositif comprenant en outre :

un ensemble de bus de lecture (133), un bus de lecture (133) reliant un groupe de pixels (30) dans des colonnes différentes de la matrice, les pixels dans le groupe ayant des positions différentes dans les séquences respectives des colonnes.

**13.** Dispositif d'imagerie selon la revendication 12, dans lequel les pixels dans le groupe ont des positions séquentielles dans les séquences respectives des colonnes.

**14.** Dispositif d'imagerie selon l'une quelconque des revendications 1 à 8, comprenant en outre :

un ensemble de bus de lecture (133), chaque bus de lecture reliant un groupe de pixels qui sont positionnés en diagonale d'un bout à l'autre de la matrice.

**15.** Dispositif d'imagerie selon l'une quelconque des revendications 11 à 14, dans lequel les bus de l'ensemble de bus de lecture (133) sont parallèles les uns aux autres.

**16.** Dispositif d'imagerie selon l'une quelconque des revendications 11 à 15, comprenant en outre :

des circuits de lecture pour lire des signaux à partir des pixels (30), les circuits de lecture étant agencés pour utiliser les bus de lecture (133) pour lire à partir d'une première colonne de pixels et, pendant la même opération de lecture, pour lire au moins une colonne supplémentaire de pixels, dans lequel les bus de lecture (133) reliés à la première colonne de pixels et les bus de lecture (133) reliés à au moins une colonne supplémentaire de pixels n'ont pas de pixels en commun.

**17.** Procédé d'imagerie d'un sujet, où il y a un mouvement relatif entre un dispositif d'imagerie CMOS et le sujet dans une première direction (22), le dispositif d'imagerie comprenant une matrice bidimensionnelle de pixels (30), la matrice ayant une pluralité de colonnes de pixels, chaque colonne étant alignée sur la première direction (22), chaque pixel comprenant un élément photosensible qui est sensible au rayonnement pendant une période d'intégration, le procédé étant **caractérisé par**

la commande des pixels dans la matrice de sorte que les pixels dans une colonne de la matrice sont simultanément exposés au rayonnement sur une période d'intégration commune pour la colonne de pixels, un instant de début d'une période d'intégration de la colonne de la matrice étant décalé par rapport à un instant de début d'une période d'intégration d'au moins une autre colonne de la matrice, et en ce que chaque colonne de pixels de la matrice est lue à la fin de la période d'intégration pour la colonne respective de pixels.

Fig. 1

Fig. 2

Fig. 4

Fig. 3

Fig. 5

Fig. 6

Fig. 7

Fig. 8

Fig. 9

Fig. 10

across track

1  2      5  6      9  10      13  14

along track

## Fig. 11

across track

along track

## Fig. 14

across track

readout bus          select          reset/transfer

$P_N-P_1$

along track

out

## Fig. 12

across track

diagonal readout bus          select          reset/transfer

along track

out

## Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6906749 B
- EP 1667428 A2
- US 5828408 A
- US 7268814 B

**Non-patent literature cited in the description**

- **PAIN et al.** CMOS Image Sensors Capable of Time-Delayed Integration. *NASA Tech Brief,* vol. 25 (4

- **LEPAGE G. et al.** CMOS long linear array for space application. *Sensors, Cameras and Systems for Scientific/Industrial Applications VII, Proceedings of SPIE-IS&T Electronic Imaging,* 01 January 2006, vol. 6068, 606807-1